# EUROPÄISCHE PATENTSCHRIFT

(11) **EP 3 299 645 B1**
(45) Veröffentlichungstag und Bekanntmachung des Hinweises auf die Patenterteilung: **17.04.2019**
(21) Anmeldenummer: 17405016.1
(22) Anmeldetag: 15.09.2017
(51) Int. Cl.: F16C 17/10, F16C 25/02, F16C 33/04, F16C 43/02, F16C 33/20

(54) **DREHVERBINDUNG AUF GLEITLAGERBASIS MIT ANTRIEBSSTRUKTUREN**
SLEWING BEARING ON BASE OF SLIDING BEARING WITH DRIVE STRUCTURES
COURONNE D'ORIENTATION À BASE D'UN PALIER LISSE AVEC STRUCTURES D'ENTRAINEMENT

(30) Priorität: 26.09.2016 CH 12512016
(43) Veröffentlichungstag der Anmeldung: 28.03.2018
(73) Patentinhaber: Gehring, Rudolf, 9315 Neukirch (CH)
(72) Erfinder: Gehring, Rudolf, 9315 Neukirch (CH)

(56) Entgegenhaltungen:
- EP-A1- 0 462 356
- EP-A1- 1 619 410
- EP-A2- 1 365 147
- EP-A2- 2 913 544
- WO-A2-01/48376
- DE-A1- 2 648 118
- DE-A1- 10 043 936
- DE-A1- 10 045 453
- DE-A1-102006 029 679
- DE-C1- 10 112 293
- DE-U1- 20 119 330
- DE-U1- 20 202 463
- DE-U1-202007 002 609

## Beschreibung

### TECHNISCHES GEBIET DER ERFINDUNG

Die vorliegende Erfindung betrifft ein Drehverbindungs-Lager mit den Funktionseinheiten Aussenring, Innenring und Gleitelementen als Lagerkörper.

### STAND DER TECHNIK

Drehverbindungs-Lager mit Gleitelementen in Leichtbauweise werden in der CH 691191, der EP 2 554 802 und der EP 2 913 544 des Anmelders beschrieben, wobei letztere den Oberbegriff des Anspruchs 1 bildet. In der weiteren Beschreibung werden diese Drehverbindungs-Lager gemäss der branchenüblichen Terminologie kurz als Drehverbindungen bezeichnet. Drehverbindungen sind eine Drehlagerart mit grossem Lagerdurchmesser und im Vergleich dazu kleinen Lagerquerschnitten. Typischerweise haben sie mittlere Durchmesser von 200 mm bis 1000 mm und eine axiale Bauhöhe von 56 mm, welche jeweils bei einem Lagertyp über den gesamten Durchmesserbereich konstant ist. Ein weiterer Unterschied von Drehverbindungen zu normalen Radiallagern besteht darin, dass Aussen- und Innenringe mit Löchern zur Aufnahme von Schrauben zum Befestigen der Ringe an Anschlussteilen versehen sind, während normale Radiallager Ringe ohne Löcher aufweisen und deshalb durch Einpressen oder durch Befestigungsringe mit den Anschlussteilen verbunden werden müssen. Wie andere Radiallager erlauben sie aber eine unbegrenzte Rotation zwischen den beiden Ringen. Aussen- und Innenring dieser bekannten Drehverbindungen in Leichtbauweise auf Gleitlagerbasis bestehen dabei meist aus Metallblech, das spanlos umgeformt wurde, um eine leichte und doch stabile Form zu erhalten. Der Innenring weist jeweils zwei konische oder konusähnliche Flächen auf, wobei die eine Konusfläche primär Druck-, die andere primär Zugbelastungen aufnimmt und beide zusammen radiale Belastungen und Kippmomente. Dank der Gleitelemente aus gleitaktiven Kunststoffen sind diese Drehverbindungen wartungsfrei. Die Drehverbindungen nach den oben erwähnten Patentschriften respektive Patentanmeldungen sind reine Drehlager, sogenannte passive Drehverbindungen, das heisst Drehverbindungen, bei denen die Relativdrehungen zwischen den beiden miteinander verbundenen Baugruppen durch äussere Einflüsse direkt auf diese Baugruppen gegeben sind. Es besteht also keine Antriebsverbindung von einer der Umgebungs-Baugruppen auf einen Ring der Drehverbindung, welcher an der anderen Baugruppe befestigt ist. Eine typische Anwendung solcher passiver Drehverbindungen findet sich bei Schienenfahrzeugen, bei denen der Fahrzeugkasten über eine Drehverbindung auf die Drehgestelle abgestützt wird. Beim Befahren einer Kurve steuern die Schienen die Schwenkbewegung des Drehgestells gegenüber dem Fahrzeugkasten. In der Mehrzahl der Anwendungsgebiete von Drehverbindungen ist es aber vorteilhaft, wenn einer der Ringe ein Antriebselement enthält, das zum Drehen der an diesem angetriebenen Ring befestigten Baugruppe gegenüber der am anderen Ring befestigten Baugruppe dient. Dabei müssen meist hohe Drehmomente übertragen werden. Eine typische Anwendung dieser Art ist die Lagerung eines Kranauslegers auf dem Kran-Grundmast. Eine typische Ausführung einer Drehverbindung für diese Anwendung ist eine Kugel-Drehverbindung mit massiven Ringen mit gehärteten Laufbahnen und Kugeln als Wälzkörper. Diese Drehverbindungen sind an einem der Lagerringe mit einer Verzahnung für einen Zahnradantrieb versehen. Dank dieser Verzahnung kann der Kranausleger zum Beispiel mittels eines Getriebemotors mit Zahnritzel gegenüber dem Kran-Grundmast gedreht werden. Die Verzahnung ist dabei direkt in einen der massiven Lagerringe gefräst. Die ganze Drehverbindung besteht aus massiven, schweren Ringen, welche spanend bearbeitet werden müssen. Eine derartig spanend erzeuge Verzahnung mit genügender Festigkeit an einem spanlos hergestellten, dünnwandigen Ring einer Leichtbaudrehverbindung ist jedoch unmöglich. Zudem muss diese Verzahnung zwingend geschmiert werden. Man könnte zwar eine Leichtbau-Drehverbindung mit einem massiven Zahnring für Zahnradantrieb ergänzen, dies würde aber sowohl das Konzept des Leichtbaus wie dasjenige der Wartungsfreiheit zunichte machen und zudem die Herstellkosten unverhältnismässig erhöhen.

Die Offenlegungsschrift DE 196 33 699 A1 beschreibt eine kugelgelagerte Riemenscheibe respektive Spannrolle, bei welcher auf den Aussenring eines normalen Kugellagers mit massiven Laufringen eine Scheibe für einen Flachriemen aufgepresst ist. Diese Riemenscheibe ist als Spannrolle für Flachriemenantriebe in Motoren, zum Beispiel beim Antrieb einer Nockenwelle durch die Kurbelwelle, konzipiert. Der Flachriemen muss also nur ein reibungsarmes mitlaufendes Element antreiben. Dieses Antriebsmoment ist sehr gering; das Konzept dieser Spannrolle ist zum Übertragen nennenswerter Drehmomente nicht geeignet. Zudem sind der aus Blech geformte Antriebsmantel und der massive, spanend hergestellte Lager-Aussenring getrennte Elemente. Diese Bauelemente können die mit der Erfindung bezweckten Eigenschaften keineswegs erfüllen; sie sind schwer und teuer in der Herstellung

Als Stand der Technik wird auch eine bestimmte Ausführung von drehelastischen Kupplungen angeführt. Eine solche Kupplung ist zum Beispiel in der Offenlegungsschrift DE 100 45 453 A1 beschrieben. Im Gegensatz zu den Kupplungen im eigentlichen Sinn, bei denen das Drehmoment von einer Antriebswelle auf eine konzentrische Abtriebswelle übertragen wird, wird hier das Drehmoment mittels Riemen auf den Mantel des Aussenringes einer Riemenscheibe übertragen, welche mittels elastischer Zwischenschicht mit dem Innenring der Riemenscheibe verbunden ist. Funktionell ist dieses Maschinenelement daher keine Kupplung im üblichen Sinne, sondern eine Riemenscheibe. Dank der elastischen Zwischenschicht sind kleine relativ-Drehbewegungen von wenigen Winkelgraden zwischen Aussen-und Innenring der Riemenscheibe möglich. Um auch eine translatorische Verschiebung zwischen Aussenring und Innenring zu vermeiden, ist zwischen diesen beiden Ringen ein Gleitring angeordnet. Bei den Ringen dieser Riemenscheibe handelt es sich um massive Bauteile, die meistens gegossen und in jedem Falle mechanisch bearbeitet und damit schwer und teuer sind.

Weitere Gleitlager des Standes der Technik sind aus der DE 10112 293 C1, der DE 20 2007 002609, den ähnlichen Anmeldungen DE 10 2006 029679 A1, DE 100 43 946 A1 und EP 1 365 147 A2 der SKF, der DE 2 648 118, den zwei Gebrauchsmustern DE 201 19 330 U1 und DE 202 02 463 U1 der Demag Moblie Crane bekannt. Ferner sind solche Gleitlager aus WO 01/48376 und den drei Veröffentlichungen DE 100 45 453 A1, EP 0 462 356 A1 und EP 1 619 419 A1 der Freudenberg Carl KG bekannt. Diesen ist gemeinsam, dass die Strukturelemente für den Antrieb entweder als eingesetzte Elemente aus in spanender Verarbeitung erzeugten Strukturen oder aus dem Vollmaterial eines Ringes spanend herausgearbeitete Strukturen aufweisen.

### DARSTELLUNG DER ERFINDUNG

Ausgehend von diesem Stand der Technik liegt der Erfindung die Aufgabe zugrunde, die vorgängig beschriebenen Nachteile der bekannten Leichtbau-Drehverbindungen und der verzahnten Wälzlager-Drehverbindungen zu beseitigen, insbesondere eine Ausführung eines Leichtbau-Drehverbindungslagers zu gestalten, welche sowohl leichte wie auch spanlos hergestellte und damit kostengünstige integrierte Strukturelemente zum wartungsfreien Antrieb mit hohen Drehmomenten enthält.

Dies wird erfindungsgemäss mit den Merkmalen des Anspruchs 1 erreicht .Dabei wird einer der Ringe spanlos so geformt oder umgeformt, dass er selber hohe Antriebsmomente übertragen kann. Je nach Durchmesser der Drehverbindung oder Optimierung für bestimmte Einsatzbedingungen kann die Übertragung des Drehmoments formschlüssig oder kraftschlüssig erfolgen. Eine besonders kostengünstige Ausführung der Erfindung erreicht man, indem in den Innenring-Oberteil eine Nut für einen Keilriemen zur kraftschlüssigen Drehmomentübertragung eingewalzt wird. Der V-förmige Querschnitt des Riemens und der Flächen zur Kraftübertragung in Verbindung mit dem grossen Durchmesser erlaubt die Übertragung hoher Drehmomente.

Für sehr hohe Antriebsmomente sind erfindungsgemässe Ausführungen mit formschlüssiger Übertragung des Antriebsmomentes bestimmt. Für kleine Drehverbindungen mit einem Aussendurchmesser bis etwa 350 mm wird dies optimal dadurch erreicht, dass der Innenring-Oberteil ein Zahnprofil für einen Zahnriemenantrieb enthält, welches durch ein spanloses Kaltwalzverfahren eingewalzt wird. Für grössere Drehverbindungen ist es wirtschaftlicher, das Zahnprofil in die untere Partie des Innenring-Unterteiles einzuwalzen oder den Innenring -Oberteil zweiteilig zu gestalten mit einem Antriebsteil und einem Dichtungsteil.. Allen Ausführungen ist gemeinsam, dass sie leicht sind und damit im Einklang stehen mit dem Grundkonzept der Drehverbindung in Leichtbauweise auf Gleitlagerbasis, kostengünstig hergestellt werden können und dass sie Strukturelemente zum wartungsfreien Antrieb enthalten.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: Eine Drehverbindung in Leichtbauweise auf Gleitlagerbasis in bekannter Bauart gemäss EP 2 554 802,
- Fig. 2: Eine Kugel-Drehverbindung in handelsüblicher Bauweise mit Verzahnung,
- Fig. 3: Eine erfindungsgemässe Drehverbindung in Leichtbauweise mit spanlos geformter V-Nut im Innenring-Oberteil für einen Keilriemenantrieb,
- Fig. 4: Eine erfindungsgemässe Drehverbindung in Leichtbauweise mit spanlos am Innenring-Oberteil im Kaltwalzverfahren erzeugtem Profil für einen Zahnriemenantrieb,
- Fig. 5: Eine erfindungsgemässe Drehverbindung in Leichtbauweise, bei welcher die Strukturelemente zum Antrieb spanlos in den Innenring-Unterteil eingearbeitet sind,
- Fig. 6: Eine erfindungsgemässe Drehverbindung in Leichtbauweise, bei welcher der Innenring-Oberteil zweiteilig ist und die die Strukturelemente zum Antrieb spanlos in den Innenring-Oberteil eingearbeitet sind,
- Fig. 7: Ein anderes Beispiel einer Drehverbindung in Leichtbauweise (nicht nach der Erfindung), bei welcher der Flansch des Innenring-Tragteils so nach innen verlängert ist, dass dieser Flansch direkt als Kupplungsflansch dienen kann und eine Ausführungsvariante zusätzlich spanlos angeformte Kupplungshülsen aufweist, und
- Fig. 8: Eine erfindungsgemässe Drehverbindung in Leichtbauweise mit einem Innenring mit einem Tragteil und einem Oberteil aus verschiedenen Werkstoffen, mit gleitaktiven Beschichtungen und mit Strukturen zum Übertragen des Drehmomentes

### BESCHREIBUNG BEVORZUGTER AUSFÜHRUNGSFORMEN

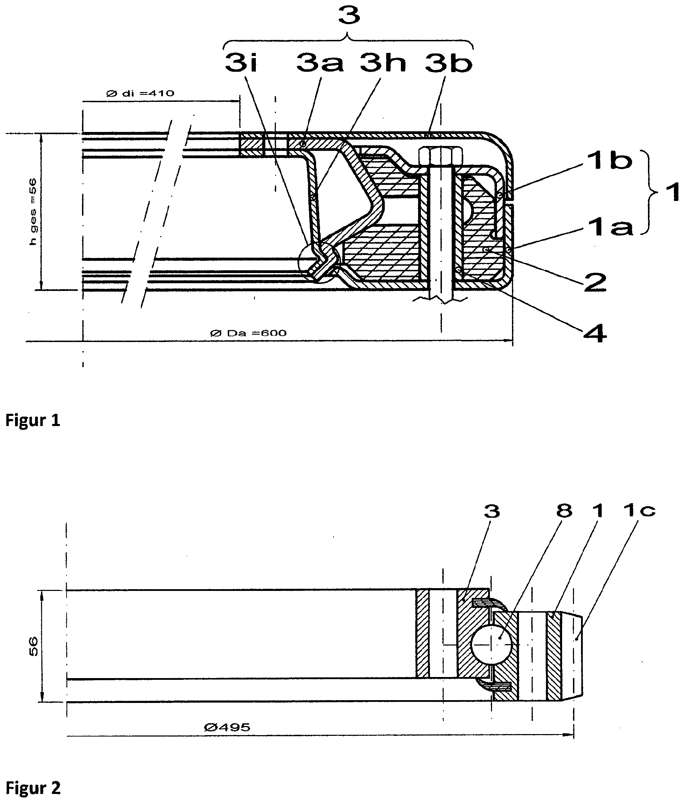

**Fig. 1** zeigt eine Drehverbindung in Leichtbauweise auf Gleitlagerbasis in bekannter Bauart gemäss EP 2 554 802. Die Hauptkomponenten sind der Aussenring 1, die Gleitelemente 2, der Innenring 3 und die Stützhülsen 4. Bei dieser Ausführungsvariante besteht der Aussenring 1 aus dem Aussenring-Unterteil 1a und dem Aussenring-Oberteil 1b. Die Gleitelemente 2 sind räumliche dreidimensionale Körper. Sie werden durch den Aussenring-Oberteil 1b fixiert und durch die Stützhülsen 4 positioniert. Die Stützhülsen 4 dienen gleichzeitig dazu, den Aussenring-Oberteil 1b in axialer Richtung in der optimalen Lage gegenüber den Gleitelementen 2 zu befestigen. Der Innenring 3 besteht aus dem Innenring-Tragteil 3a, dem Innenring-Oberteil 3b und bei der gezeichneten Ausführung dem Stützring 3h. Der Stützring 3h ist nur bei hochfesten Varianten der Drehverbindung vorhanden. Er entfällt in Anwendungen, bei denen keine hohe Tragfähigkeit notwendig ist, dafür aber der besonders tiefe Preis das entscheidende Kriterium. Der Verbindungsbereich 3i zwischen Innenring-Tragteil 3a und Stützring 3h ist hier als formschlüssige Verbindung gezeichnet, bei welcher der Stützring 3h in den Innenring-Tragteil 3a eingewalzt wird. Das ist jedoch nur eine beispielhafte Verbindungsart. Alternativ können zum Beispiel Innenring-Tragteil 3a und Stützring 3h miteinander verschweisst sein.

Der Innenring-Oberteil 3b ist eine Kombination von Schutzabdeckung und Spalt- oder LabyrinthDichtung, er gibt der ganzen Drehverbindung eine schmutzabweisende, einfache Form, welche leicht zu reinigen ist und schützt den Lagerbereich vor Verschmutzung. Die Drehverbindung gemäss Figur 1 ist eine passive Drehverbindung; sie ist eine ideale Lösung wo geringes Gewicht, Wartungsfreiheit, Eignung für kleine Schwenkbewegungen oder ein tiefer Preis gefordert sind. Sie kann aber keine Antriebsmomente übertragen und kommt deshalb für viele Anwendungen nicht in Frage.

**Fig. 2** zeigt eine Kugel-Drehverbindung in handelsüblicher Bauweise mit einer spanend erzeugten Verzahnung 1c. Diese handelsüblichen Drehverbindungen weisen massive Aussenringe 1 und Innenringe 3 auf. Diese Aussenringe 1 und Innenringe 3 sind deshalb schwer; sie müssen warmgewalzt und anschliessend gedreht, das heisst spanend bearbeitet, gehärtet und geschliffen werden. Zum Einfügen der Kugeln sind in einem Ring radiale Bohrungen notwendig, welche nachher verschlossen werden müssen. Deren Herstellung ist deshalb aufwendig und teuer. Ein weiterer Nachteil dieser Drehverbindungen auf Wälzlagerbasis ist der Umstand, dass diese Art der Verzahnung, welche für einen Antrieb mittels Zahnritzel konzipiert ist, zwingend geschmiert werden muss. Ihr Vorteil gegenüber den bekannten Drehverbindungen in Leichtbauweise auf Gleitlagerbasis gemäss EP 2 554 802 ist die Möglichkeit, dank der integrierten spanend erzeugten Verzahnung 1c Antriebsmomente auf einen der Ringe und die darauf befestigte Baugruppe zu übertragen. In der gezeigten Ausführung würde der Antriebsmotor mit dem Ritzel auf der gleichen Baugruppe befestigt wie der Innenring 3

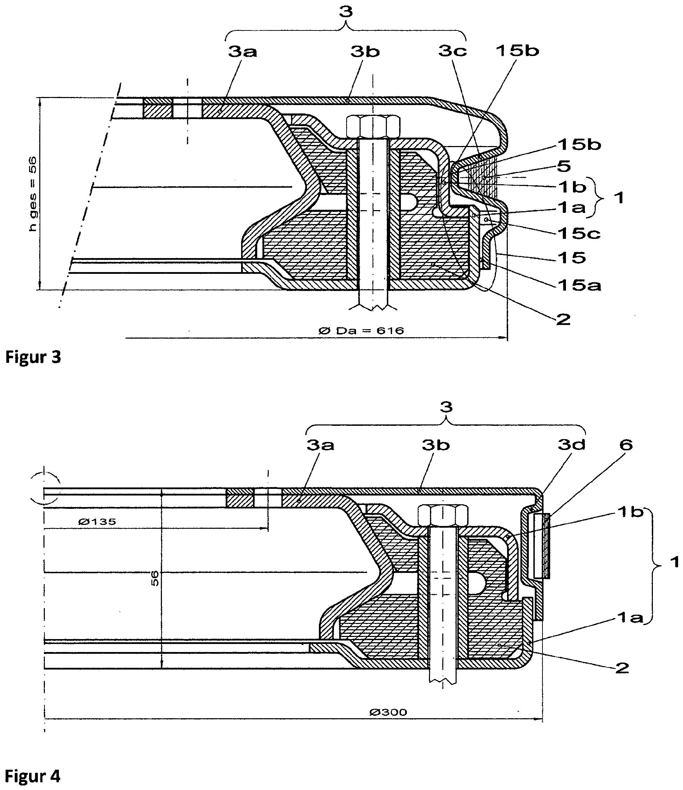

**Fig. 3** zeigt eine erfindungsgemässe Drehverbindung auf Gleitlagerbasis in Leichtbauweise mit spanlos geformter Nut für Keilriemen 3c im Innenring-Oberteil 3b. Die Nut für Keilriemen 3c kann durch das Metalldrück-Verfahren in einem Arbeitsgang für den gesamten Innenring-Oberteil 3b gefertigt werden. Der Mehrpreis dieser Ausführung gegenüber der bekannten passiven Drehverbindung gemäss EP 2 554 802 ist also minim. Dank dem guten Kraftschluss der V-förmigen Nut für Keilriemen 3c lassen sich mit dieser Ausführungsform erhebliche Antriebsmomente übertragen. Der Antrieb mittels Keilriemen ist wartungsfrei. Der Keilriemen 5 wird üblicherweise auch genutzt, um zwischen Antriebseinheit und Drehverbindung eine Untersetzung zu realisieren, was die Verwendung kleiner, leichter Antriebseinheiten ermöglicht. Innenring-Oberteil 3b und Aussenring 1 sind so geformt, dass sie zusammen ein Dichtungssystem 15 bilden. Dieses besteht in der gezeigten Ausführung aus einem ersten Dichtspalt 15a, einem zweiten Dichtspalt 15 b sowie einem Stauraum 15 c und bildet somit ein hochwirksames Labyrinth. Das Dichtsystem 15 kann im Detail auch anders gestaltet werden. Für viele Anwendungen genügt es, wenn es nur aus einem Dichtspalt 15a oder 15 b besteht. Der Innenring-Oberteil 3b der erfindungsgemässen Ausführung erfüllt damit gleichzeitig 3 Funktionen: Er ist Schutzabdeckung, Antriebselement und Abdichtung.

**Fig. 4** zeigt eine erfindungsgemässe Drehverbindung in Leichtbauweise mit einem spanlos am Innenring-Oberteil 3b im Kaltwalzverfahren erzeugten Profil für Zahnriemen 3d. Die Grundform des Innenring-Oberteils 3b und das Profil für Zahnriemen 3d werden in sequentiellen spanlosen Umformprozessen erzeugt. Dank der formschlüssigen Kraftübertragung lassen sich mit dieser erfindungsgemässen Ausführung sehr hohe Antriebsmomente übertragen. Der Antrieb mittels Zahnriemen ist ebenfalls wartungsfrei. Der Zahnriemen 6 ermöglicht dank seiner hohen Flexibilität auch kleine Durchmesser der Antriebsritzel, was hohe Untersetzungsverhältnisse im Antriebsstrang ermöglicht. Diese erfindungsgemässe Ausführung ergibt damit leichte, preisgünstige Drehverbindungen für die Übertragung grosser Antriebsmomente. Sie ist überdies sehr kompakt. Wie in der Darstellung der Erfindung erwähnt, ist diese Ausführungsform besonders bei kleinen Drehverbindungen besonders wirtschaftlich.

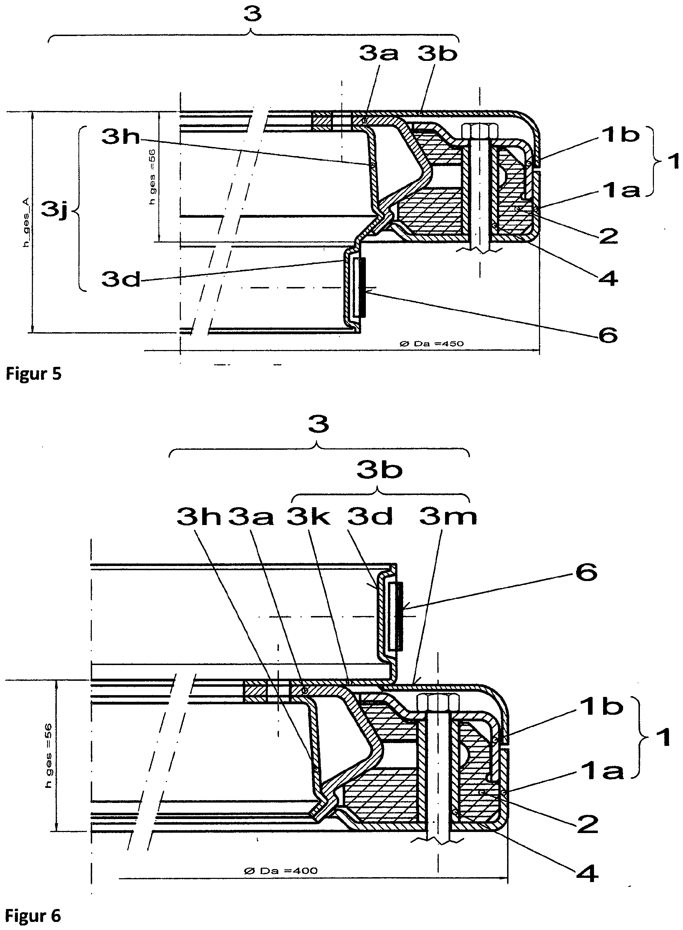

**Fig. 5** zeigt eine erfindungsgemässe Drehverbindung in Leichtbauweise, bei welcher die Strukturelemente zum Antrieb spanlos in den Innenring-Unterteil 3j eingearbeitet sind. Bei dieser Ausführung ist der Stützring 3h gemäss Figur 1 nach unten verlängert und bildet so den Innenring-Unterteil 3j. Dieser besteht aus dem Bereich Stützring 3h und dem Bereich Profil für Zahnriemen 3d, welche einstückig vorzugsweise aus einer Blechrondelle gefertigt werden. Diese Ausführung hat gegenüber der Variante gemäss Figur 4 den Vorteil, dass auch eine grosse Drehverbindung mit einem Profil für Zahnriemen versehen werden kann, welches dank kleinem Durchmesser wirtschaftlich hergestellt werden kann. Die Bauhöhe "h_gesA" ist dafür grösser als bei der Variante nach Figur 4. Dies spielt aber in den meisten Anwendungen keine Rolle, weil der Antriebsteil mit dem Profil für Zahnriemen 3d im vorhandenen Bauraum der unteren Anschlusskonstruktion untergebracht werden kann.

**Fig. 6** zeigt eine erfindungsgemässe Drehverbindung in Leichtbauweise, bei welcher der Innenring-Oberteil 3b zweiteilig ist und das Profil für Zahnriemen 3d spanlos in den Innenring-Antriebsteil 3k eingearbeitet ist. Die zweiteilige Ausführung erlaubt es, einen kleinen Antriebsteil 3k zu haben, bei welchem sich das "Profil für Zahnriemen" 3d wirtschaftlich herstellen lässt und trotzdem einen Innenring-Oberteil 3b mit den Funktionen Antrieb, Schutzabdeckung und Dichtung bei grossen Drehverbindungen aufzuweisen. Funktionell und bezüglich Einbauraum ist sie prinzipiell gleich wie die Ausführung gemäss Figur 5. Sie ist eine Alternative zur Ausführung nach Figur 5, wenn die Lage des Antriebs-Zahnriemenrades oberhalb der Drehverbindung im Gesamtkonzept einer Anlage günstiger ist als die Anordnung unten.

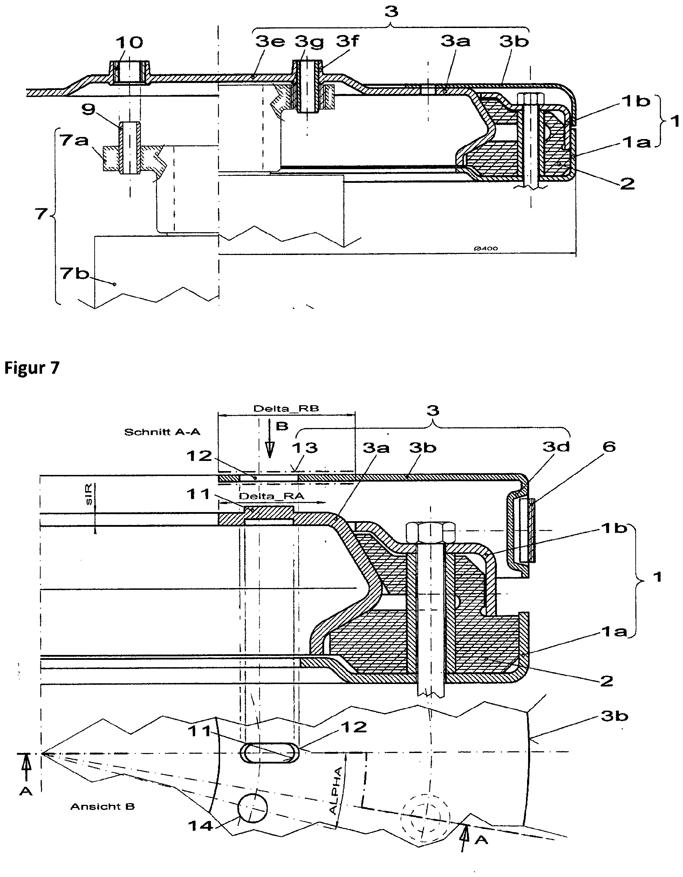

**Fig. 7** zeigt ein anderes Beispiel einer Drehverbindung in Leichtbauweise (nicht nach der Erfindung), bei welcher der Flansch des Innenring-Tragteils 3a so nach innen verlängert ist, dass die zentrale Flanschpartie 3e direkt als Kupplungsflansch dienen kann. Bei den beschriebenen Ausführungsformen gemäss den Figuren 1 und 3-6 ist das Ausgangsmaterial für den Innenring-Tragteil 3a eine Blechrondelle mit einer geschlossenen Kreisfläche. Der Innenteil dieser Rondelle mit Durchmesser "di" (Figur1) wird bei diesen Ausführungen für die fertige Drehvebbindung nicht benötigt. Bei grossen Drehverbindungen wird er benutzt, um damit Innenring-Tragteile 3a kleinerer Drehverbindungen herzustellen.

**Fig. 8** zeigt eine erfindungsgemässe Drehverbindung mit einen Innenring 3, bei dem der Innenring-Tragteil 3a und der Innenring-Oberteil 3b aus verschiedenen Werkstoffen bestehen. Der Innenring 3 weist Strukturen zum Übertragen des Drehmomentes auf und der Innenring-Oberteil 3b ist mit einer partiellen gleitaktiven Beschichtung 13 versehen. Unterschiedliche Werkstoffe der verschiedenen Komponenten bieten in vielen Fällen Vorteile. So kann zum Beispiel der Innenring-Tragteil 3a aus Festigkeitsgründen aus hochfestem Stahl bestehen und der Innenring-Oberteil 3b aus Gewichtsgründen aus einer Aluminium-Legierung. Auch die Möglichkeit, ein eloxiertes Aluminiumteil beliebig einzufärben ist oft erwünscht, zum Beispiel um aus Sicherheitsgründen drehende Teile besonders zu kennzeichnen oder um spezifische optische Effekte zu erzielen. Um die speziellen Eigenschaften dieser Teile besser darstellen zu können sind der Innenring-Tragteil 3a und der Innenring-Oberteil 3b in der oberen Schnittzeichnung A-A im Sinne einer Explosionszeichnung auseinandergezeichnet. Unten ist ein Sektor des Grundrisses "Ansicht B" gezeichnet, sodass man die Form von radialem Keil 11 und Keilnut 12 sieht. Die Anzahl der radialen Keile kann den Anforderungen der Anwendung angepasst werden. Ein üblicher Wert ist etwa 1 radialer Keil 11 pro 100mm Teilkreisumfang. Die Anzahl der Befestigungsbohrungen 14 ist ebenfalls von der Grösse der Drehverbindung abhängig. Der Winkel "ALPHA" zwischen Keil 11 und Befestigungsbohrungen 14 variiert dementsprechend. Mit dem Grundriss (Ansicht B) soll unter anderem aufgezeigt werden, dass die radialen Keile 11 respektive die Keilnuten 12 zwischen den Befestigungsbohrungen 14 angeordnet sind. Die Oberflächen des Innenring-Oberteils 3b sind in der Ringfläche mit der radialen Breite "Delte_RB" mit einer gleitaktiven Beschichtung 13 versehen. Die radiale Breite "Delta_RB" ist etwas grösser als die radiale Breite "Delta_RA", welche der Breite der der ringförmigen Kontaktfläche zwischen Innenring-Tragteil 3a und Innenring-Oberteil 3b entspricht. Dank der Beschichtung 13 können sich die beiden Teile des Innenringes 3 bei Temperaturänderungen gegeneinander verschieben, was bei diesen zentralsymmetrischen Teilen nur in radialer Richtung erforderlich ist. Um in Umfangsrichtung das Drehmoment trotz der geringen Reibung zwischen den verschiedenen Teilen übertragen zu können, ist der Innenring-Tragteil 3a mit radialen Keilen 11 versehen. Diese sind in einem speziellen Feinstanzverfahren "durchgesetzt", das heisst das Keilmaterial wird in diesem Falle nicht ausgestanzt, sondern nur axial etwa um die Hälfte der Wandstärke "sIR" verschoben, sodass die einstückige Verbindung innerhalb des Innenring-Tragteiles 3a erhalten bleibt. Der Innenring-Oberteil 3b weist Keilnuten 12 auf, welche in radialer Richtung einige Millimeter länger sind als die radialen Keile 11. Die Keilnuten 12 können ebenfalls nur "durchgesetzt" oder komplett ausgestanzt sein. In Umfangsrichtung besteht zwischen radialem Keil 11 und Keilnut 12 ein minimales, aufgrund der Herstelltoleranzen erforderliches Spiel. Die radialen Keile 11 und die Keilnuten 12 können auch andere Formen aufweisen als die beispielhaft dargestellten. Die Verbindungsart gemäss Figur 8 ist besonders vorteilhaft bei Drehverbindungen mit Zahnriemenantrieb und den damit übertragbaren hohen Drehmomenten in Verbindung mit einem Innenring 3 mit dem Innenring-Tragteil 3a und dem Innenring-Oberteil 3b aus verschiedenen Werkstoffen. Sie kann aber auch mit anderen Antriebsarten verwendet werden oder es kann nur eines der beiden Hauptmerkmale (Beschichtung oder radialer Keil) gewählt werden.

Eingetragene Masse sind generell keine verbindlichen Werte, sondern nur beispielhafte Angaben, um einen Eindruck über die Grössenverhältnisse zu geben.

**BEZUGSZEICHENLISTE**

| | | | |
|---|---|---|---|
| 1 | Aussenring | 3m | Innenring- Dichtungsteil |
| 1a | Aussenring-Unterteil | 4 | Stützhülsen |
| 1b | Aussenring-Oberteil | 5 | Keilriemen |
| 1c | spanend erzeugte Verzahnung | 6 | Zahnriemen |
| 2 | Gleitelement | 7 | Antriebseinheit |
| 3 | Innenring | 7a | Kupplungshälfte |
| 3a | Innenring-Tragteil | 7b | Getriebemotor |
| 3b | Innenring-Oberteil | 8 | Kugeln |
| 3c | Nut für Keilriemen | 9 | Kupplungsbolzen |
| 3d | Profil für Zahnriemen | 10 | Elastische Buchse |
| 3e | zentrale Flanschpartie | 11 | radiale Keile, |
| 3f | Kupplungsbuchse | 12 | Keilnuten |
| 3g | Wulst | 13 | Beschichtung |
| 3h | Stützring | 14 | Befestigungsbohrung |
| 3i | Verbindungsbereich | 15 | Dichtungssystem |
| 3j | Innenring-Unterteil | 15a | erster Dichtspalt |
| 3k | Innenring-Antriebsteil | 15b | zweiter Dichtspalt |
| | | 15c | Stauraum |

## Patentansprüche

1. Drehverbindungs-Lager auf Gleitlagerbasis mit den Funktionseinheiten Aussenring (1), Innenring (3) und zwischen diesen angeordneten Gleitelementen (2) als Lagerkörper, wobei einer der Ringe (1, 3) ein integriertes Strukturelement (3c, 3d) zum Antrieb des zugeordneten Rings (1, 3) enthält, **dadurch gekennzeichnet, dass** der Aussenring (1) und der Innenring (3) aus Metallblech sind, wobei die Strukturelemente (3c, 3d) zum Antrieb durch ein spanloses Formgebungsverfahren in eine Komponente des zugeordneten Ringes (1, 3) geformt sind.

2. Drehverbindungs-Lager nach Anspruch 1, **dadurch gekennzeichnet, dass** das Strukturelement zum Antrieb eine Nut (3c) für einen Keilriemen (5) ist, und dass die Partie des Innenringes (3) oder des Aussenringes (1) mit der Keilriemennut (3c) gleichzeitig eine Labyrinthdichtung mit dem Aussenring (1) oder dem Innenring (3) bildet.

3. Drehverbindungs-Lager nach Anspruch 1, **dadurch gekennzeichnet, dass** das Strukturelement zum Antrieb ein spanlos erzeugtes Profil (3d) für einen Zahnriemen (6) ist.

4. Drehverbindungs-Lager nach Anspruch 3, **dadurch gekennzeichnet, dass** die Komponente des zugeordneten Ringes (1, 3), in den das Profil (3d) für einen Zahnriemen (6) eingearbeitet ist, ein Innenring-Oberteil (3b) oder ein Aussenring-Unterteil (1a) ist.

5. Drehverbindungs-Lager nach den Ansprüchen 3 oder 4, **dadurch gekennzeichnet, dass** der Innenring-Oberteil (3b) oder der Aussenring-Unterteil (1a) mit dem Strukturelement zum Antrieb (3c, 3d) im Zusammenwirken mit dem Aussenring (1) respektive dem Innenring-Oberteil (3b) gleichzeitig ein Dichtungssystem (15) bildet.

6. Drehverbindungs-Lager nach Anspruch 4, **dadurch gekennzeichnet, dass** der Innenring-Oberteil (3b) zweiteilig ist und aus einem Innenring-Antriebsteil (3k) mit dem Profil (3d) für einen Zahnriemen (6) und einem Innenring-Dichtungsteil (3m) besteht.

7. Drehverbindungs-Lager nach Anspruch 3, **dadurch gekennzeichnet, dass** das Profil (3d) für den Zahnriemen (6) in ein Innenring-Unterteil (3j) eingearbeitet ist.

8. Drehverbindungs-Lager nach den Ansprüchen 2 bis 6, **dadurch gekennzeichnet, dass** der Innenring-Oberteil (3b) aus einem anderen Werkstoff besteht als ein Innenring-Tragteil (3a), dass der Innenring-Oberteil (3b) mindestens im Kontaktbereich mit dem Innenring-Antriebsteil (3k) mit einer gleitaktiven Beschichtung (13) versehen ist und dass der Innenring-Tragteil (3a) aus seinem Material durchgesetzte radiale Keile (11) und der Innenring-Oberteil (3b) durchgesetzte oder ausgestanzte entsprechende Keilnuten (12) zur Drehmomentübertragung besitzt.

## Claims

1. Slewing baring on a plane bearing basis with the functional units outer ring (1), inner ring (3) and gliding elements (2) arranged between these as bearing bodies, wherein one of the rings (1,3) contains an integrated structural element (3c, 3d) for driving the associated ring (1, 3), **characterised in that** the outer ring (1) and the inner ring (3) are made of sheet metal, wherein the structural elements for driving (3c, 3d) are formed by a chipless shaping process in a component of the associated ring (1, 3).

2. Slewing bearing according to claim 1, **characterised in that** the structural element for the drive is a groove (3c) for a V-belt (5), and that the part of the inner ring (3) or the outer ring (1) with the V-belt groove (3c) simultaneously forms a labyrinth seal with the outer ring (1) or the inner ring (3).

3. Slewing bearing according to claim 1, **characterised in that** the structural element for the drive is a profile (3d) for a toothed belt (6), and **in that** this profile was produced by a chipless shaping process.

4. Slewing bearing according to claim 3, **characterised in that** the component of the associated ring (1, 3) into which the profile (3d) for a toothed belt (6) is formed is an inner ring upper part (3b) or an outer ring lower part (1a).

5. Slewing bearing according to claims 3 or 4, **characterised in that** the inner ring upper part (3b) or the outer ring lower part (1a), which contains the structural element for the drive (3c, 3d) additionally forms a sealing system (15) in combination with the outer ring (1) or the inner ring upper part (3b).

6. Slewing bearing according to claim 4, **characterised in that** the inner ring upper part (3b) is in two parts and consists of an inner ring drive part (3k) with the profile (3d) for a toothed belt (6) and an inner ring sealing part (3m).

7. Slewing bearing according to claim 3, **characterised in that** the profile (3d) for the toothed belt (6) is worked into an inner ring lower part (3j).

8. Slewing bearing according to claims 2 to 6, **characterised in that** the inner ring upper part (3b) consists of a different material than an inner ring supporting part (3a), **in that** the inner ring upper part (3b) is provided at least in the contact area with the inner ring drive part (3k) with a slide-active coating (13), and that the inner ring supporting part (3a) has permeated radial wedges from its material (11) and the inner ring upper part (3b) has permeated or stamped corresponding wedge grooves (12) for torque transmission.

## Revendications

1. Palier du type couronne d'orientation à base de palier lisse avec les unités fonctionnelles bague extérieur (1), bague intérieure (3) et éléments coulissants (2) disposés entre elles comme corps de palier, dont une des bagues (1,3) contient un élément structurel intégré (3c, 3d) pour l'entraînement de la bague associée (1, 3), **caractérise en ce que** la bague extérieure (1) et la bague intérieure (3) sont en tôle métallique, et que les éléments structurels (3c, 3d) pour l'entraînement sont formés par un procédé de formage sans enlèvement de copeaux en un composant de la bague associée (1, 3).

2. Palier du type couronne d'orientation selon la revendication 1, **caractérisé en ce que** l'élément structurel pour l'entraînement est une rainure (3c) pour une courroie trapézoïdale (5) et **en ce que** la partie de la bague intérieure (3) ou de la bague extérieure (1) avec la rainure pour la courroie trapézoïdale (3c) forme également un joint labyrinthe avec la bague extérieure (1) ou la bague intérieure (3).

3. Palier du type couronne d'orientation selon la revendication 1, **caractérisé en ce que** l'élément structurel pour l'entraînement est un profilé (3d) formé par un processus sans enlèvement de copeaux pour une courroie crantée (6).

4. Palier du type couronne d'orientation selon la revendication 3, **caractérisé en ce que** le composant de la bague associée (1, 3) dans laquelle le profilé (3d) pour une courroie crantée (6) est incorporé est une partie supérieure (3b) de bague intérieure ou une partie inférieure (1a) de bague extérieure.

5. Palier du type couronne d'orientation selon les revendications 3 ou 4, **caractérisé en ce que** la partie supérieure (3b) de bague intérieure ou la partie inférieure (1a) de bague extérieure avec l'élément structurel pour l'entraînement (3c, 3d) forme, en interaction avec la bague extérieure (1) respectivement avec la partie supérieure (3b) de bague intérieure, également un système d'étanchéité (15).

6. Palier du type couronne d'orientation selon la revendication 4, **caractérisé en ce que** la partie supérieure (3b) de bague intérieure est en deux parties et se compose d'une partie d'entraînement (3k) de bague intérieure avec le profilé (3d) pour une courroie dentée (6) et une partie d'étanchéité (3m) de bague intérieure.

7. Palier du type couronne d'orientation selon la revendication 3, **caractérisé en ce que** le profilé (3d) pour la courroie crantée (6) est façonné dans une partie inférieure (3j) de bague intérieure.

8. Palier du type couronne d'orientation selon les revendications 2 à 6, **caractérisé en ce que** la partie supérieure (3b) de bague intérieure est constitué d'un matériau différent de celui d'une partie support (3a) de bague intérieure, **en ce que** la partie supérieure (3b) de bague intérieure est pourvue au moins dans la zone de contact avec la partie d'entraînement (3k) de bague intérieur d'un revêtement de glissement (13) et **en ce que** la partie support (3a) de bague intérieure présente des clavettes radiales (11) qui sont gaufrées dans leur matériau et que la partie supérieure (3b) de bague intérieure présente des rainures de clavette (12) correspondantes qui sont découpées ou gaufrées pour transmettre un couple de rotation.
